# EUROPÄISCHE PATENTANMELDUNG

(11) **EP 1 480 317 A2**
(43) Veröffentlichungstag der Anmeldung: **24.11.2004**
(21) Anmeldenummer: 04003239.3
(22) Anmeldetag: 13.02.2004
(51) Int. Cl.: H02K 21/24

(54) **Elektrische Maschine in Axialflussbauweise**

(30) Priorität: 19.05.2003 DE 10322474
(71) Anmelder: ROBERT BOSCH GMBH, 70442 Stuttgart (DE)
(72) Erfinder: Nipp, Eckhart, 77830 Buehlertal (DE)

(57) **Zusammenfassung**

Es wird eine elektrische Maschine in Axialflussbauweise angegeben, die ein Hauptelement (11) als Stator und ein Hauptelement (12) als Rotor aufweist, der dem Stator unter Belassung eines axialen Luftspalts (13) gegenübersteht. Zur kostengünstigen Fertigung der elektrischen Maschine in bauraumsparender Axialflussbauweise, die eine hohe Drehmomentdichte besitzt, weist das eine Hauptelement (11) eine Polscheibe (16) mit einer der gewünschten Polzahl entsprechenden Anzahl von über die Scheibenfläche fächerartig verteilten, äquidistanten, flachen Polsegmenten (17, 18) aus magnetisch leitfähigem Material und eine ringförmige Erregerwicklung (22) auf, die zusammen mit einem Rückschlussjoch (21) der Polscheibe (16) zugeordnet ist. Von den Polsegmenten (17, 18) sind die in Folge ungeradzahligen und die in Folge geradzahligen Polsegmente (17, 18) über je ein Verbindungsstück (19, 20) aus magnetisch leitendem Material miteinander verbunden (Fig. 1).

## Beschreibung

### Stand der Technik

Die Erfindung geht aus von einer elektrischen Maschine in Axialflussbauweise nach dem Oberbegriff des Anspruchs 1.

Eine bekannte elektrische Maschine in Axialflussbauweise, auch Scheibenläufermaschine genannt, (US 6 172 442 B1) ist als einphasiger, bürstenloser Gleichstrommotor mit einem scheibenförmigen Rotor ausgeführt, der auf seiner dem Stator zugekehrten Scheibenfläche mit in Umfangsrichtung äquidistant angeordneten, axial magnetisierten Permanentmagneten besetzt ist. Der den scheibenförmigen Rotor drehgelagert aufnehmende, parallel zum Rotor ausgerichtete Stator hat ein Statorjoch und eine Stator- oder Ankerwicklung, die zwei diametral angeordnete, am Statorjoch befestigte Ringspulen aufweist. Die Statorwicklung wird mit Wechselstrom beaufschlagt. Um ein Anlaufen der Maschine in der Motorbetriebsweise zu gewährleisten ist das Statorjoch asymmetrisch ausgeführt und weist beispielsweise zwei diametrale Aussparungen auf, die sich einseitig unter die beiden Ringspulen erstrecken.

### Vorteile der Erfindung

Die erfindungsgemäße elektrische Maschine mit den Merkmalen des Anspruchs 1 vereinigt die Vorteile der bei Fahrzeuggeneratoren bevorzugten Klauenpolkonstruktion mit einer einfachen, kostengünstigen Ringspule als Erregerwicklung mit den Vorteilen der bauraumsparenden Axialflussbauweise, nämlich der sehr kurzen axialen Baulänge. Die erfindungsgemäße Maschine hat eine höhere Drehmomentdichte als bekannte Scheibenläufermaschinen, die in der Regel Luftspaltwicklungen einsetzen und dadurch einen großen Axialluftspalt besitzen, und zugleich eine geringere Baulänge als Radialflussmaschinen, die nur mit größerer Baulänge eine gleiche Drehmomentdichte erreichen.

Die erfindungsgemäße Maschine wird bevorzugt einphasig ausgeführt, kann aber für Antriebe mit einem geforderten höheren Anzugsdrehmoment und insbesondere für geforderten Reversierbetrieb mehrphasig, vorzugsweise zweiphasig, ausgelegt werden.

Durch die in den weiteren Ansprüchen aufgeführten Maßnahmen sind vorteilhafte Weiterbildungen und Verbesserungen der im Anspruch 1 angegebenen elektrischen Maschine möglich.

Das die Polscheibe aufweisende Hauptelement kann wahlweise als Stator oder Rotor eingesetzt werden. In beiden Fällen ist gemäß einer vorteilhaften Ausführungsform der Erfindung die Polscheibe fest mit dem Rückschlussjoch verbunden und die Erregerwicklung zwischen Polscheibe und Rückschlussjoch eingeschlossen. Auf diese Weise wird ein mehrpoliges, axiales Magnetfeld mit einer sehr einfachen und kostengünstigen Ringspule erzeugt, wobei mit der Ringspule ein hoher Kupferfüllfaktor erzielt wird.

Bei Einsatz des die Polscheibe aufweisenden Hauptelements als Rotor ist ein Schleifringpaar mit Schleifbürsten zum Beaufschlagen der Erregerwicklung mit Gleichstrom erforderlich. Will man die Schleifringe mit Schleifbürsten vermeiden, so sind gemäß einer vorteilhaften Ausführungsform der Erfindung nur Rückschlussjoch und Erregerwicklung fest miteinander verbunden und raumfest angeordnet und ist die Polscheibe relativ zu Rückschlussjoch und Erregerwicklung drehbar angeordnet. In diesem Fall muss die Polscheibe als selbstständiges, stabiles Bauteil ausgeführt werden, was gemäß einer vorteilhaften Ausführungsform der Erfindung dadurch erreicht wird, dass die Polsegmente und ihre Verbindungsstege in Kunststoff oder einem anderen magnetisch nicht leitfähigem Material eingebettet werden. Alternativ können auch zwischen den beiden Teilen der Polscheibe dünne magnetisch leitfähige Brücken vorgesehen werden. Dies insbesondere dann, wenn ein ausreichend hoher magnetischer Fluss zur Verfügung steht. Die dünnen Brücken werden dann leicht gesättigt und die Flussverluste damit gering gehalten.

Gemäß einer vorteilhaften Ausführungsform der Erfindung ist das Rückschlussjoch als Topf mit einer bis zur Topfrandebene sich erstreckenden, zentralen, einstückigen Nabe ausgebildet und die Polscheibe ist auf dem Topfrand und auf die Nabe aufgelegt. Im Falle der relativen Drehbarkeit der Polscheibe zum Rückschlussjoch ist zwischen der Ringfläche des Topfrands und der Stirnfläche der Nabe einerseits und den Polsegmenten andererseits ein minimaler Luftspalt sichergestellt. Das Rückschlussjoch kann aus einem Blech in Tiefziehtechnik hergestellt werden, was insbesondere für kleinere Maschinen eine kostengünstige Fertigung ergibt. Bei größeren Maschinenausführungen wird das Rückschlussjoch aus Sintermetallen, wie gepresstes Eisenpulver, SMC oder kunststoffgebundenen, ferromagnetischen Werkstoffen, sog. Composite-Materialien, hergestellt.

Gemäß vorteilhaften Ausführungsformen der Erfindung ist das die Polscheibe aufweisende Hauptelement der Stator der elektrischen Maschine und das den Rotor bildende andere Hauptelement ist als Asynchronläufer, vorzugsweise Käfigläufer, Reluktanzläufer oder permanentmagneterregter Synchronläufer ausgeführt. Bevorzugt wird der permanentmagneterregte Synchronläufer, da einerseits leicht fächerförmige Pole erzeugt werden können und andererseits ein größerer axialer Arbeitsluftspalt zwischen Stator und Rotor, sonstige Luftspalte oder eine geringere magnetische Leitfähigkeit der Rückschlussmaterialien sich nicht unmittelbar negativ auswirken.

Gemäß einer vorteilhaften Ausführungsform der Erfindung ist das die Polscheibe aufweisende Hauptelement der Stator und auf beiden Seiten des den Rotor bildenden anderen Hauptelements jeweils ein Stator angeordnet. Dabei ist im Rotor kein Rückschluss erforderlich, da der Magnetfluss sich unmittelbar von einer Statorseite durch die Permanentmagnete auf die andere Statorseite schließt. Der Vorteil dieser Ausführung liegt in dem axial symmetrischen Aufbau, so dass die auf den Rotor wirkenden elektromagnetischen Kräfte ausbalanciert sind und nicht zu Lagerproblemen führen.

Gemäß einer vorteilhaften Ausführungsform der Erfindung ist das die Polscheibe aufweisende Hauptelement der Stator und jeweils ein Stator auf beiden Seiten des vom anderen Hauptelement gebildeten Rotors angeordnet, der auf jeder seiner beiden, jeweils einem Stator zugekehrten Scheibenfläche axial magnetisierte Permanentmagnete mit in Umfangsrichtung wechselnder Polarität trägt. Die beiden Statoren oder die beiden Reihen von Permanentmagneten auf der Scheibenfläche des Rotors sind um 90° elektrisch gegeneinander verdreht. Durch diese konstruktive Ausführung wird eine zweiphasige elektrische Maschine realisiert.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
- Fig. 1: einen Längsschnitt einer elektrischen Maschine in Axialflussbauweise längs der Linie I - I in Fig. 2,
- Fig. 2: eine Draufsicht des Stators in Fig. 1,
- Fig. 3: einen gleichen Längsschnitt des Stators wie in Fig. 1 gemäß einem modifizierten Ausführungsbeispiel,
- Fig. 4: ausschnittweise eine gleiche Darstellung des Stators in Fig. 2 in einer modifizierten Ausführung,
- Fig. 5 bis 7: jeweils einen gleichen Längsschnitt wie in Fig. 1 der elektrischen Maschine gemäß weiteren Ausführungsbeispielen,
- Fig. 8: einen Längsschnitt eines als Lüfterrad ausgebildeten Rotors,
- Fig. 9: eine Draufsicht des Rotors in Richtung Pfeil IX in Fig. 8.

### Beschreibung der Ausführungsbeispiele

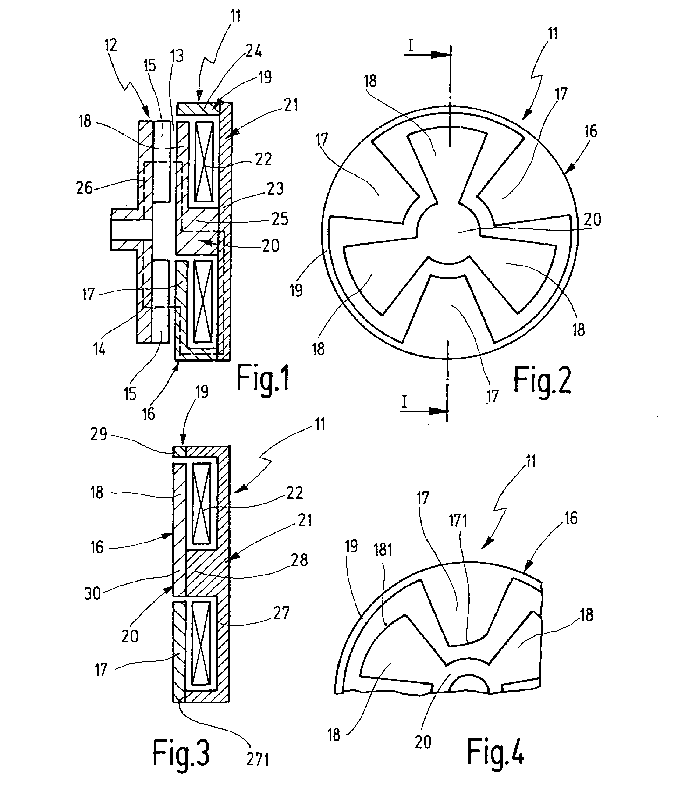

Die in Fig. 1 im Längsschnitt schematisiert dargestellte, einphasige, permanentmagneterregte Synchronmaschine als Ausführungsbeispiel für eine allgemeine elektrische Maschine in Axialflussbauweise besitzt ein einen Stator bildendes Hauptelement 11 und ein einen Rotor bildendes Hauptelement 12, die koaxial nebeneinander und parallel zueinander angeordnet sind und zwischen sich einen Arbeitsluftspalt 13 einschließen. Der Rotor 12 besitzt einen scheibenförmigen Rotorkörper 14 aus magnetisch leitendem Material, der drehfest auf einer hier nicht dargestellten Rotorwelle sitzt. Der Rotorkörper 14 ist auf der dem Stator 11 zugekehrten Scheibenfläche mit Permanentmagneten 15 besetzt. Die Permanentmagnete 15 sind axial magnetisiert. Die Magnetisierungsrichtung ist in in Umfangsrichtung aufeinanderfolgenden Permanentmagneten 15 gegensinnig.

Der Stator 11, der in Fig. 1 im Schnitt und in Fig. 2 in Draufsicht zu sehen ist weist eine Polscheibe 16 mit einer der gewünschten Polzahl, hier sechs, entsprechenden Anzahl von über die Scheibenfläche fächerartig verteilten äquidistanten, flachen Polsegmenten 17, 18 aus magnetisch leitfähigem Material auf. Die Polsegmente 17, 18 sind so angeordnet, dass in Umfangsrichtung jeweils ein Polsegment 18 auf ein Polsegment 17 folgt, die geradzahligen Polsegmente 17 und die ungeradzahligen Polsegmente 18 also nicht benachbart sind. Die Polsegmente 17 einerseits und die Polsegmente 18 andererseits sind über je ein Verbindungsstück 19 bzw. 20 aus magnetisch leitfähigem Material miteinander verbunden. Die Verbindungsstücke 19, 20 sind mit den jeweiligen Polsegmenten 17, 18 einstückig ausgeführt. Das die Polsegmente 17 verbindende Verbindungsstück 19 ist am Scheibenrand, und das die Polsegmente 18 verbindende Verbindungsstück 20 ist in Scheibenmitte angeordnet. Mit der Polscheibe 16 ist ein Rückschlussjoch 21 fest verbunden, und zwischen Rückschlussjoch 21 und der Polscheibe 16 ist eine als Ringspule ausgeführte Erregerwicklung 22 koaxial zu Rückschlussjoch 21 und Polscheibe 16 angeordnet. Im Ausführungsbeispiel der Fig. 1 ist das Rückschlussjoch 21 als ebene Platte 23 ausgebildet. Das die Polsegmente 17 verbindende äußere Verbindungsstück 19 ist als Hohlzylinder 24 und das die Polsegmente 18 verbindende innere Verbindungsstück 20 ist als Vollzylinder 25 ausgeführt. Hohlzylinder 24 und Vollzylinder 25 sind nach Auflegen und Befestigen der Erregerwicklung 22 auf der Platte 23 mit ihren von den Polsegmente 17, 18 abgekehrten Stirnflächen auf die Platte 23 aufgesetzt und mit dieser fest verbunden. Wird die Erregerwicklung 22 mit einem Strom beaufschlagt, so bildet sich im Stator 11 ein magnetischer Fluss aus, der sich über den Arbeitsluftspalt 13 und den Rotor 12 schließt. In Fig. 1 ist eine Feldlinie 26 des magnetischen Flusses stark vereinfacht strichliniert eingezeichnet. Wie zu sehen ist, führt die Polscheibe 16 den Magnetfluss von dem zentralen Verbindungsstück 20 über die fächerartigen, Polsegmente 18 radial nach außen, wo dieser in den Arbeitsluftspalt 13 eintritt. Gleichzeitig wird der Gegenfluss von dem äußeren Verbindungsstück 19 über die fächerartigen Polsegmente 17 radial nach innen und dort axial in den Arbeitsluftspalt 13 geführt.

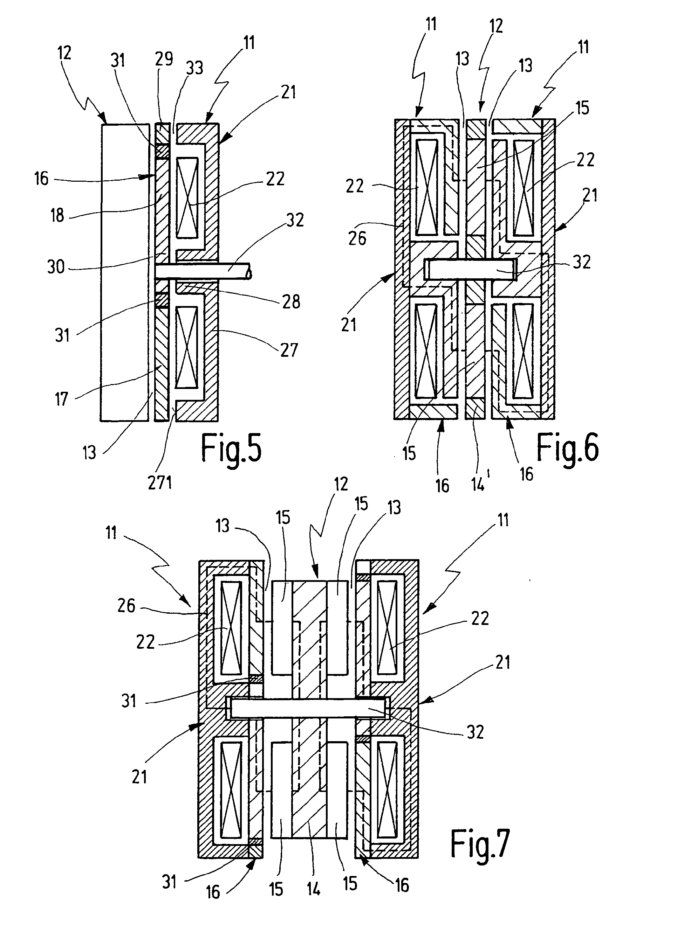

In dem in Fig. 3 dargestellten Ausführungsbeispiel des Hauptelements 11, das anstelle des Hauptelements 11 in Fig. 1 verwendet werden kann, wird das Rückschlussjoch 21 von einem Topf 27 mit einer bis zur Topfrandebene sich erstreckenden, zentralen Nabe 28, die einstückig mit dem Topf 27 ist, gebildet. Der Topf 27 ist bei Maschinen kleinerer Leistung vorzugsweise als Tiefziehteil aus einem Blech hergestellt. Bei der Polscheibe 16 ist das die Polsegmente 17 verbindende äußere Verbindungsstück 19 als Kreisring 29 und das die Polsegmente 18 verbindende innere Verbindungsstück 20 als Kreisscheibe 30 ausgebildet. Die Dicke des Kreisrings 29 und der Kreisscheibe 30 entsprechen der Dicke der Polsegmente 17 und 18. Die wiederum aus zwei Teilen mit je einer Hälfte der Polsegmente 17, 18 und einem Verbindungsstück 19, 20 bestehende Polscheibe 16 ist so auf das Rückschlussjoch 21 aufgesetzt und verbunden, dass der Kreisring 29 auf dem Topfrand 271 und die Kreisscheibe 30 auf der Stirnfläche der Nabe 28 aufliegt. Zur Erhöhung der Stabilität der Polscheibe 16 können die in Fig. 2 zu sehenden freien Räumen zwischen den Polsegmenten 17, 18 und den Verbindungsstücken 19, 20 mit einem magnetisch nicht leitfähigem Material, z.B. Kunststoff, ausgefüllt sein, wie dies in Fig. 5 und 7 dargestellt ist. Die dort im Schnitt zu sehenden Füllstücke sind mit 31 gekennzeichnet.

Um in der Betriebsweise der elektrischen Maschine als Motor den Anlauf des Rotors 12 sicherzustellen, wird, wie üblich, der Eisenkreis so konstruiert, dass ein Rastmoment entsteht, das zu einer günstigen, definierten Startposition führt. Im vorliegenden Fall sind zur Erzeugung des Rastmoments in der Polscheibe 16 Asymmetrien eingebaut. Im Ausführungsbeispiel der Fig. 4 ist eine solche Asymmetrie dadurch erreicht, dass die radialen Begrenzungskanten 171, 181 der Polsegmente 17, 18 einen vom konzentrischen Kreisbogen abweichenden Verlauf aufweisen. Alternativ können auch dreidimensionale Asymmetrien vorgesehen werden, z.B. abgebogene Nasen an dem aus einem Blechteil hergestellten Topf 27 des Rückschlussjoches 21.

Bei der elektrischen Maschine gemäß Fig. 1 können die Hauptelemente 11, 12 ihre Funktion vertauschen, so dass das Hauptelement 11 der Rotor und das Hauptelement 12 der Stator ist. In diesem Fall müssen für das als Rotor fungierende Hauptelement 11 Schleifringe und Schleifbürsten für die Beaufschlagung der Erregerwicklung 22 mit Gleichstrom vorgesehen werden. Bei der in Fig. 5 im Schnitt dargestellten elektrischen Maschine ist das den Rotor bildende Hauptelement 12 insoweit abgewandelt, als die Polscheibe 16 nicht mit dem wiederum als Topf 27 mit zentraler Nabe 28 ausgeführten Rückschlussjoch 21 fest verbunden ist, sondern relativ zu diesem drehbar angeordnet ist. Die Polscheibe 16 sitzt drehfest auf einer Rotorwelle 32, die beispielsweise durch die Nabe 28 des Rückschlussjoches 21 hindurchgeführt und drehend gelagert ist. Zwischen der Kreisringfläche des Topfrandes 271 und der Kreisringfläche der Nabe 28 einerseits und der Polscheibe 16 andererseits ist ein minimaler axialer Luftspalt 33 vorhanden, der eine störungsfreie Rotation der Polscheibe 16 relativ zu dem feststehenden Rückschlussjoch 21 mit Erregerwicklung 22 ermöglicht. Durch diese konstruktive Abänderung des als Rotor fungierenden Hauptelements 11 können die Schleifringe mit Schleifbürsten entfallen. Das als Stator ausgebildete andere Hauptelement 12 ist wie ein herkömmlicher Stator mit einer mehrphasigen Wicklung versehen. Durch Variation des Gleichstroms der Erregerwicklung 22 kann die Felderregung in einem sehr weiten Bereich eingestellt werden. Selbstverständlich ist es auch möglich, das Rückschlussjoch 21 wie in Fig. 1 als Platte 23 und die Polscheibe 16 wie zu Fig. 1 beschrieben auszuführen. In diesem Fall bildet sich der für die Drehung der Polscheibe 16 erforderliche Luftspalt 33 zwischen den von den Polsegmenten 17, 18 abgekehrten Stirnflächen der als Hohlzylinder 24 bzw. Vollzylinder 25 ausgeführten Verbindungsstücke 19, 20 einerseits und der Platte 23 andererseits aus.

Die in Fig. 6 im Schnitt skizzierte, einphasige elektrische Maschine ist symmetrisch aufgebaut, um Lagerprobleme durch die auf das als Rotor fungierende Hauptelement 12 wirkenden elektromagnetischen Kräfte zu vermeiden. Das wie vorstehend beschrieben als Stator fungierende Hauptelement 11 ist zweifach vorhanden und auf jeder Seite des als Rotor fungierenden Hauptelements 12 angeordnet, so dass zwei axiale Arbeitsluftspalte 13 entstehen. Der Aufbau jedes der beiden Hauptelemente 11 ist wie vorstehend beschrieben. Der scheibenförmige Rotor (Hauptelement 12), der auf einer Rotorwelle 32 drehfest sitzt, weist in der Scheibenebene liegende Permanentmagnete 15 auf, die axial magnetisiert sind, wobei bei in Umfangsrichtung aufeinanderfolgenden Permanentmagneten 15 die Magnetisierungsrichtung gegensinnig ist. Für die permanentmagnetische Erregung ist kein Rotorrückschluss erforderlich, da der Magnetfluss sich unmittelbar von einem Stator durch die Permanentmagnete 15 auf den anderen Stator schließt. Die Permanentmagnete 15 können daher zusammen mit der Rotorwelle 32 durch Kunststoffumspritzen in einer Kunststoffscheibe zusammengefasst werden. Die Rotorwelle 32 ist drehbar in den beiden, jeweils einen Stator bildenden Hauptelementen 11 aufgenommen.

In Fig. 7 ist eine zweiphasige elektrische Maschine in Axialflussbauweise schematisch skizziert. Die setzt sich praktisch aus zwei einphasigen Maschinen, wie eine in Fig. 1 und 2 dargestellt und beschrieben ist, zusammen. Das als Rotor fungierende Hauptelement 12 hat einen scheibenförmigen Rotorkörper 14 aus magnetisch leitendem Material, dessen beide jeweils einem einen Stator bildenden Hauptelement 11 zugeordnete Scheibenflächen mit axial magnetisierten Permanentmagneten 15 in der beschriebenen Weise besetzt sind. Zwischen den Permanentmagneten 15 und jedem Stator 11 ist der Arbeitsluftspalt 13 vorhanden. Die beiden Statoren 11 sind in Umfangsrichtung um 90° elektrisch zueinander verdreht angeordnet. Alternativ können auch die Permanentmagnete 15 auf beiden Seiten des Rotors 12 um 90° elektrisch gegeneinander verdreht sein.

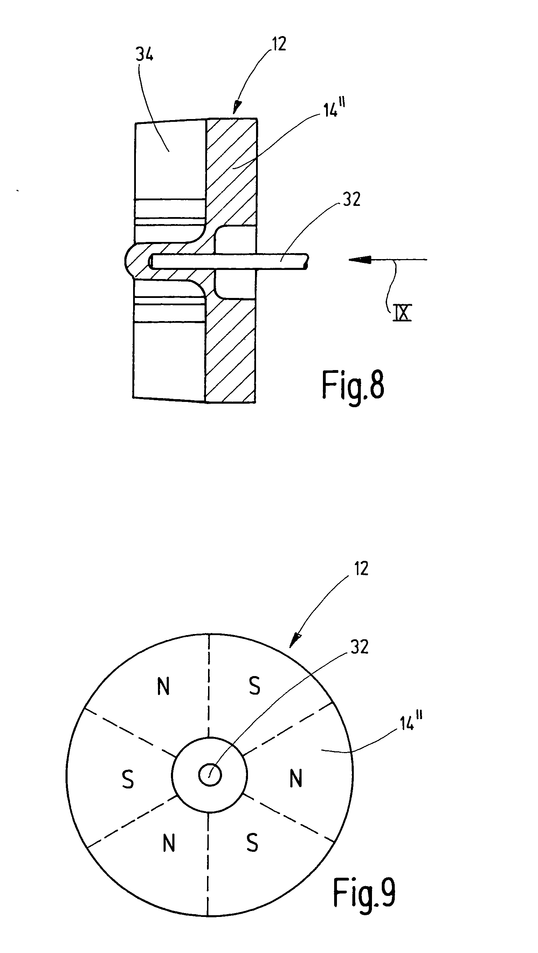

In Fig. 8 und 9 ist ein als Lüfterrad ausgebildeter permanentmagneterregter Rotor im Längsschnitt dargestellt, der z.B. anstelle des in Fig. 1 gezeigten permanentmagneterregten Rotors das Hauptelement 12 in dem Motor gemäß Fig. 1 bildet. Der scheibenförmige Rotorkörper 14" ist aus kunststoffgebundenem Magnetmaterial gefertigt und so magnetisiert, dass in Umfangsrichtung aneinanderliegende Sektoren eine axiale, aber abwechselnd gegensinnige Magnetisierungsrichtung aufweisen, also immer ein Nordpolsektor einem Südpolsektor und umgekehrt folgt (Fig. 9). An den Rotorkörper 14" sind Lüfterflügel 34 einstückig angeformt, und in den Rotorkörper 14" ist zentral eine Rotorwelle 32 eingepresst.

## Patentansprüche

1. Elektrische Maschine in Axialflussbauweise mit einem Hauptelement als Stator und einem Hauptelement als Rotor, der dem Stator unter Belassung eines axialen Luftspalts (13) gegenübersteht, **dadurch gekennzeichnet, dass** das eine Hauptelement (11) eine Polscheibe (16) mit einer der gewünschten Polzahl entsprechenden Anzahl von über die Scheibenfläche fächerartig verteilten, äquidistant angeordneten, flachen Polsegmenten (17, 18) aus magnetisch leitfähigem Material, von denen die in Folge ungeradzahligen und die in Folge geradzahligen Polsegmente (17, 18) über je ein Verbindungsstück (19, 20) aus magnetisch leitfähigem Material miteinander verbunden sind, und eine ringförmige Erregerwicklung (22) aufweist, die zusammen mit einem Rückschlussjoch (21) der Polscheibe (16) zugeordnet ist.

2. Maschine nach Anspruch 1, **dadurch gekennzeichnet, dass** das die eine Hälfte der Polsegmente (17) verbindende Verbindungsstück (19) am Scheibenrand und das die andere Hälfte der Polsegmente (18) verbindende Verbindungsstück (20) in Scheibenmitte der Polscheibe (16) angeordnet ist.

3. Maschine nach Anspruch 1 oder 2, **dadurch gekennzeichnet, dass** Polscheibe (16), Rückschlussjoch (21) und Erregerwicklung (22) fest miteinander verbunden sind.

4. Maschine nach Anspruch 1 oder 2, **dadurch gekennzeichnet, dass** Rückschlussjoch (21) und Erregerwicklung (22) fest miteinander verbunden sind und dass die Polscheibe (16) dazu relativ drehbar angeordnet ist.

5. Maschine nach einem der Ansprüche 1 - 4, **dadurch gekennzeichnet, dass** die Polsegmente (17, 18) zusammen mit ihren Verbindungsstücken (19, 20) in einem magnetisch nicht leitendem Material eingebettet, vorzugsweise mit Kunststoff umspritzt sind.

6. Maschine nach einem der Ansprüche 3 - 5, **dadurch gekennzeichnet, dass** das Rückschlussjoch (21) als Topf (27) mit einer bis zur Topfrandebene sich erstreckenden, zentralen Nabe (28) ausgebildet ist, dass von den die Polsegmente (17, 18) verbindenden Verbindungsstücken (19, 20) das äußere Verbindungsstück (19) als Kreisring (29) und das innere Verbindungsstück (20) als Kreisscheibe (30) mit jeweils eine der Dicke der Polsegmente (17, 18) entsprechende Dicke ausgebildet ist und dass die Polscheibe (16) mit ihren Polsegmenten (17, 18) auf den Stirnflächen von Topfrand (271) und Nabe (28) aufliegt oder einen minimalen Abstand davon hat.

7. Maschine nach Anspruch 6, **dadurch gekennzeichnet, dass** der Topf (27) als Tiefziehteil aus einem Blech hergestellt ist.

8. Maschine nach einem der Ansprüche 2 - 5, **dadurch gekennzeichnet, dass** das Rückschlussjoch (21) als ebene Platte (23) ausgebildet ist, dass von den die Polsegmente (17, 18) verbindenden Verbindungsstücken (19, 20) das äußere Verbindungsstück (19) als Hohlzylinder (24) und das innere Verbindungsstück (20) als Vollzylinder (25) ausgeführt ist und dass die ebene Platte (23) auf den von den Polsegmenten (17, 18) abgekehrten Stirnflächen von Hohl- und Vollzylinder (24, 25) aufliegt oder diesen mit einem minimalen Luftspalt vorgelagert ist.

9. Maschine nach einem der Ansprüche 1 - 8, **dadurch gekennzeichnet, dass** die Erregerwicklung (22) koaxial zum Rückschlussjoch (21) und der Polscheibe (16) angeordnet und mit einem Gleichstrom beaufschlagbar ist.

10. Maschine nach einem der Ansprüche 1 - 9, **dadurch gekennzeichnet, dass** die Polsegmente (17, 18) asymmetrisch ausgebildet sind, vorzugsweise dass die radialen Begrenzungskanten (171, 181) der Polsegmente (17, 18) einen vom konzentrischen Kreisbogen abweichenden Verlauf aufweisen.

11. Maschine nach einem der Ansprüche 1 - 10, **dadurch gekennzeichnet, dass** das die Polscheibe (16) aufweisende Hauptelement (11) der Stator ist und dass das den Rotor bildende andere Hauptelement (12) als Käfigläufer, Reluktanzläufer oder permanenterregter Synchronläufer ausgebildet ist.

12. Maschine nach einem der Ansprüche 1 - 10, **dadurch gekennzeichnet, dass** das die Polscheibe (16) aufweisende Hauptelement (11) der Rotor ist und dass das den Stator bildende andere Hauptelement (12) eine mehrphasige Statorwicklung trägt.

13. Maschine nach einem der Ansprüche 1 - 12, **dadurch gekennzeichnet, dass** das die Polscheibe (16) aufweisende Hauptelement (11) der Stator ist und dass ein gleich ausgebildetes weites Hauptelement (11) als Stator auf der vom ersten Hauptelement (11) abgekehrten Seite des den Rotor bildenden anderen Hauptelements (12) angeordnet ist.

14. Maschine nach Anspruch 13, **dadurch gekennzeichnet, dass** das den Rotor bildende andere Hauptelement (12) einen scheibenförmigen Rotorkörper (14) aus magnetisch nicht leitendem Material aufweist, in dem axial magnetisierte Permanentmagnete (15) eingebettet sind.

15. Maschine nach Anspruch 13, **dadurch gekennzeichnet, dass** das den Rotor bildende andere Hauptelement (12) einen scheibenförmigen Rotorkörper (14) aus magnetisch leitendem Material aufweist und dass die beiden, jeweils einem der als Stator fungierenden Hauptelemente (11) zugekehrten Scheibenflächen des Rotorkörpers (14) mit axial magnetisierten Permanentmagneten (15) besetzt sind und dass die beiden Hauptelemente (11, 12) oder die beiden Permanentmagnet-Anordnungen auf den Scheibenflächen (15) um 90° elektrisch gegeneinander verdreht sind.

16. Maschine nach Anspruch 13, **dadurch gekennzeichnet, dass** das den Rotor bildende andere Hauptelement (12) einen scheibenförmigen Rotorkörper (14) aus kunststoffgebundenem Permanentmagnetmaterial aufweist, in dem in Umfangsrichtung aneinanderliegende Sektoren abwechselnd gegensinnig axial magnetisiert sind.
